# EUROPÄISCHE PATENTSCHRIFT

(11) **EP 2 071 501 B1**
(45) Veröffentlichungstag und Bekanntmachung des Hinweises auf die Patenterteilung: **14.08.2013**
(21) Anmeldenummer: 07023109.7
(22) Anmeldetag: 29.11.2007
(51) Int. Cl.: G07C 9/00, G06Q 10/00, G01C 21/20

(54) **Zur Auslieferungsabwicklung vorgesehenes mobiles Erfassungsgerät mit einer anbaubaren peripheren GPS-gestützten Navigationseinheit**
Mobile recording device for handling deliveries with attachable peripheral GPS navigation unit
Appareil de saisie mobile prévu pour la livraison avec unité périphérique montable de navigation GPS

(43) Veröffentlichungstag der Anmeldung: 17.06.2009
(73) Patentinhaber: Schenk, Wolfgang, 53175 Bonn (DE); Gündüz, Fatih, 50226 Frechen (DE); Schmidt, Timo, 53125 Bonn (DE); Saglam, Albay, 50226 Frechen (DE)
(72) Erfinder: Schenk, Wolfgang, 53175 Bonn (DE); Gündüz, Fatih, 50226 Frechen (DE); Schmidt, Timo, 53125 Bonn (DE); Saglam, Albay, 50226 Frechen (DE)
(74) Vertreter: Sparing Röhl Henseler

(56) Entgegenhaltungen:
- EP-A- 1 396 595
- WO-A-01/22695
- DE-A1- 19 733 683
- FR-A- 2 841 718
- US-A1- 2004 073 361
- US-A1- 2004 100 776
- US-A1- 2006 061 458

## Beschreibung

Die Erfindung betrifft eine Modul-Baugruppe für ein mobiles zur Auslieferungsabwicklung vorgesehenes Erfassungsgerät nach dem Oberbegriff des Anspruchs 1.

Aus DE 199 25 524 A1 ist ein mobiles Erfassungsgerät zur Auslieferungsabwicklung im Bereich der Kurier-, Express-, und Paketdienste bekannt. Das mobile Erfassungsgerät weist einen Leser für an auszuliefernden Gegenständen angebrachte maschinenlesbare Informationen auf.

Derartige mobile Erfassungsgeräte dienen der Verwaltung und Logistikoptimierung der auszuliefernden Gegenstände, indem die an den Gegenständen angebrachten Informationen durch den Leser ausgelesen und der auszuliefernde Gegenstand identifiziert wird. Zudem können die Informationen beispielsweise auf einem Display dargestellt und Angaben über die Auslieferung durch eine Auslieferungsperson eingegeben werden.

Nachteilig dabei ist, daß eine Auslieferungsperson Ortskenntnisse bei der Auslieferung der Gegenstände haben muß, um zum Ort der Auslieferungsadresse zu gelangen. Insbesondere bei einer Urlaubsvertretung, im Krankheitsfall und bei neu einzuarbeitendem Auslieferungspersonal ist eine optimierte Auslieferung bei einer Vielzahl von auszuliefernden Gegenständen nicht möglich.

Es sind zwar mobile Navigationsgeräte bekannt, die sich allerdings für ein Auslieferungsunternehmen aufgrund der Vielzahl von auszuliefernden Gegenständen durch eine Auslieferungsperson an einem Tag nicht eignen, da die Adressen in das mobile Navigationsgerät eingegeben werden müssen und zwei voneinander unabhängige Geräte vorliegen, die bei der Routenplanung und beim Ausliefern immer wieder auf den neuesten Stand gebracht werden müssen.

Ferner sind Fahrzeug-Terminals, wie beispielsweise DLoG-IPC 6/215 Staplerterminal, bekannt, die in Lkws, Staplern und Nutzfahrzeugen verwendet werden, die relativ groß sind und sich aufgrund ihrer Größe nicht zur mobilen Verwendung eignen.

In dem Dokument US 2004/100776 A1 ist ein Anwendungsmodul offenbart, das ein Gehäuse umfasst mit einer Anwendungselektronik innerhalb des Gehäuses und elektrische Verbinder an zumindest zwei unterschiedlichen Seiten des Gehäuses für eine elektrische Verbindung mit anderen Modulen, mit denen das Anwendungsmodul mechanisch verbunden ist, wobei die elektrischen Verbinder mit der Anwendungselektronik verbunden sind. Eine elektrische Intermodulkommunikation ist durch aufeinander ausgerichtete elektrische Verbinder an gegenüberliegenden Seiten benachbarter Module bereitgestellt.

Dieses Dokument offenbart ebenfalls, dass tragbare Handhaltecomputer von Palm, Inc. an der Unterseite einen Verbinder aufweisen, der es Verbrauchern erlaubt, verschiedene Anwendungen einschnappend anzuschliessen, wie beispielsweise eine Kamera, einen GPS-Empfänger, eine Strichcodeabtastvorrichtung, ein Aufnahmegerät oder ein Modem.

Aufgabe der Erfindung ist es daher, eine Modul-Baugruppe für ein zur Auslieferungsabwicklung vorgesehenes mobiles Erfassungsgerät nach dem Oberbegriff des Anspruchs 1 zu schaffen, das eine bessere Zustellung der auszuliefernden Gegenstände mit einer optionalen Navigationsfunktion ermöglicht, wobei es zudem klein und handlich bei Aufrechterhaltung der vollen Funktionalität des Erfassungsgeräts aufgebaut ist.

Diese Aufgabe wird durch die Merkmale des Anspruchs 1 gelöst.

Hierdurch wird eine Modul-Baugruppe für ein mobiles zur Auslieferungsabwicklung vorgesehenes Erfassungsgerät geschaffen. Das Erfassungsgerät weist einen Leser für maschinenlesbare Daten, ein Anzeige-Display und eine Schnittstelle zur Datenkommunikation auf. Mit dem Leser für maschinenlesbare Daten können an auszuliefernden Gegenständen angebrachte Informationen ausgelesen werden. Die auszuliefernden Gegenstände sind so auch identifizierbar. In dem Anzeige-Display können die dem auszuliefernden Gegenstand zugeordneten Daten dargestellt werden. Die Modul-Baugruppe ist als periphere GPS-gestützte Navigationseinheit ausgebildet, die anbaubar an dem Erfassungsgerät angebracht werden kann und Navigationsdaten bereitstellt. Die Modul-Baugruppe kann somit optional mit dem Erfassungsgerät verbunden werden, wobei die bereitgestellten Navigationsdaten über die Schnittstelle des Erfassungsgeräts für wählbare Auslieferungsorte abrufbar sind. Die Schnittstelle am Erfassungsgerät wird an der Modul-Baugruppe reproduziert. Auch bei mit der Modul-Baugruppe verbundenem Erfassungsgerät steht die Schnittstelle des Erfassungsgeräts weiter für andere Funktionen zur Verfügung. Die Funktionalität der Schnittstelle des Erfassungsgeräts wird gleichsam durch die Modul-Baugruppe "durchgeschliffen", so daß die Funktionalität der Schnittstelle weiterhin zur Verfügung steht, derart, als ob die Modul-Baugruppe nicht anwesend wäre. Über die Schnittstelle kann beispielsweise wie gewohnt ein im Erfassungsgerät vorhandener Akku aufgeladen werden.

Um die Größe des mit der Modul-Baugruppe verbundenen Erfassungsgeräts nicht unnötig zu vergrößern, ist das Anzeige-Display des Erfassungsgeräts zum Darstellen der Navigationsdaten für einen Auslieferungsort ausgestaltet, und in einem Speicher der Modul-Baugruppe sind die Befehle zum Ausführen der Funktionen der Modul-Baugruppe abgelegt und ausführbar. Hierzu kann eine ebenfalls im Speicher der Modul-Baugruppe abgelegte bzw. gespeicherte Setuproutine vorgesehen sein, die automatisch gestartet wird, nachdem das Erfassungsgerät die an der Schnittstelle angebrachte Modul-Baugruppe erkannt hat. D.h. das Betriebssystem des Erfassungsgeräts erkennt insbesondere über USB die Modul-Baugruppe und legt ein Laufwerk beispielsweise im Windows CE an. Die Setuproutine im Speicher der Modul-Baugruppe startet und modifiziert die Software des Erfassungsgeräts, was nötig ist, damit die Software des Erfassungsgeräts, die Software, d.h. die im Speicher abgelegten Befehle, der Modul-Baugruppe und die Software zur Bereitstellung der Navigationsdaten koexistieren können. Nachdem die Setuproutine die Software des Erfassungsgeräts modifiziert hat, registriert die Setuproutine die Schnittstellensoftware und die Software zur Bereitstellung der Navigationsdaten. Dabei ist zu beachten, dass sowohl die Schnittstellensoftware als auch die Software zur Bereitstellung der Navigationsdaten nicht in dem Speicher des Erfassungsgeräts installiert wird. Dadurch ist gewährleistet, dass die Schnittstellensoftware und die Software zur Bereitstellung der Navigationsdaten auch nach einem Warm- oder Kaltstart mit ihrem Status vor dem Start starten bzw. weiterarbeiten können.

Ferner ist es bevorzugt, dass neben der Reproduktion der Schnittstelle des Erfassungsgeräts an der Modul-Baugruppe Öffnungen des Gehäuses des Erfassungsgeräts, die von der Modul-Baugruppe abdeckbar sind, an der Modul-Baugruppe unter Beibehaltung der Maße und Lage zueinander reproduziert sind. Gleichsam wie die Schnittstelle des Erfassungsgeräts durch die Modul-Baugruppe durchgeschliffen wird, werden die Öffnungen an dem Erfassungsgerät, d.h. insbesondere die Öffnungen zum Befestigen von Modulen am Erfassungsgerät, durch die Modul-Baugruppe durchgeschliffen. So können insbesondere mit einem Gewinde versehene Öffnungen am Erfassungsgerät bei Beibehaltung der Lage und Maße zueinander an der Modul-Baugruppe reproduziert werden. So ist es möglich, dass nach dem Anbringen der Modul-Baugruppe an der Schnittstelle weiterhin andere periphere Geräte an der Schnittstelle, die ihrerseits an der Modul-Baugruppe reproduziert ist, angeschraubt werden können, wie beispielsweise Kommunikationsstecker. Die Modul-Baugruppe ist ihrerseits modular aufgebaut, wobei das "Innenleben" vom Gehäuse der Modul-Baugruppe unabhängig ist, und so die Modul-Baugruppe an jedes Erfassungsgerät angepasst werden kann, wenn nur das Gehäuse der Modul-Baugruppe an das Gehäuse des Erfassungsgeräts angepasst wird.

Zur Sicherstellung der Anpassbarkeit können in der Modul-Baugruppe zur Verbindung mit der Schnittstelle des Erfassungsgeräts austauschbare Steckverbindungen vorgesehen sein, wobei zum einen bei unterschiedlichen Erfassungsgeräten die Verbindung mit der Schnittstelle ausgetauscht wird, sowie die Steckverbindung zur Reproduktion der Schnittstelle des Erfassungsgeräts. Hierdurch ist ein sehr hohes Maß an Kompatibilität möglich. Sofern die Schnittstelle des Erfassungsgeräts ein COM-Interface ist, ist dieses am Gehäuse der Modul-Baugruppe geeignet reproduzierbar, und ein hohes Maß an Kompatibilität und Flexibilität wird erhalten. Durch die austauschbaren Steckverbindungen, die an die Schnittstelle des Erfassungsgeräts angepaßt sind, ist es möglich, ein "Kern-Modul" aus dem Speicher für die Modul-Baugruppe, einem GPS-Modul und der Antenne vorzusehen, das mit den austauschbaren Steckverbindungen verdrahtet werden kann, und so eine Einheit zu schaffen, die individuell an das Erfassungsgerät anpaßbar ist. Das Kernmodul aus die Programme bzw. Befehle und Landkarten speicherndem Speicher, GPS-Modul und Antenne kann immer gleich gefertigt werden. Das Gehäuse der Modul-Baugruppe kann auch immer gleich gefertigt werden, wobei Aufnahmen für die Schnittstellen an gegenüberliegenden Seiten des Gehäuses vorgesehen sein müssen, um die Schnittstelle, mit der die Modul-Baugruppe verbunden ist, am gegenüberliegenden Ende zu reproduzieren.

Insbesondere bei einem COM-Interface können zur Befestigung des Steckers an dieser Schnittstelle Schrauben vorgesehen sein, die sich durch das Gehäuse der Modul-Baugruppe erstrecken, und die kopfseitig mit einem Gewinde zur Aufnahme von Schrauben zur Befestigung eines Steckers am reproduzierbaren COM-Interface ausgestaltet sind. Hierdurch wird nicht nur ein hohes Maß an Funktionalität durch die Reproduktion der Schnittstelle geschaffen, sondern auch weiterhin die Stabilität gewährleistet, die ohne die Modul-Baugruppe am Erfassungsgerät für den Anschluß anderer Geräte bzw. Vorrichtungen vorliegen würde. Im Gehäuse der Modul-Baugruppe sind Aufnahmen bzw. Kanäle für Schrauben vorgesehen, die eine Befestigung der Modul-Baugruppe und dem Erfassungsgerät gewährleisten, aber gleichzeitig ist sichergestellt, daß ihrerseits die Schrauben so ausgestaltet sind, daß an der Modul-Baugruppe die identische Befestigung für weitere Vorrichtungen wie an dem Erfassungsgerät möglich ist.

Die im Speicher der Modul-Baugruppe abgelegten Befehle bzw. die Software der Modul-Baugruppe sind bzw. ist so ausgestaltet, daß die Navigationsfunktion autark in der Modul-Baugruppe durchführbar ist. Insofern muß das Erfassungsgerät selbst keine Daten für die Navigation bereitstellen oder verarbeiten. Das Erfassungsgerät dient lediglich mit dem Anzeige-Display zur Anzeige der Navigationsdaten.

Um die Größe der Modul-Baugruppe klein zu halten, sind am Erfassungsgerät vorgesehene Eingabemittel zur Eingabe von Abfragen betreffend die Navigationsfunktion verwendbar. So braucht an der Modul-Baugruppe selbst kein Eingabemittel vorgesehen zu sein.

Für eine drahtlose Kommunikation zwischen dem Erfassungsgerät und der Modul-Baugruppe ist die Modul-Baugruppe vorzugsweise mit einer Bluetoothunterstützung versehen. Insoweit kann die Modul-Baugruppe eine Bluetooth-Einheit aufweisen, die eine drahtlose Kommunikation mit dem Erfassungsgerät ermöglicht, wenn das Erfassungsgerät seinerseits ebenfalls über eine Bluetooth-Einheit verfügt. Es kann auch vorgesehen sein, dass die Bluetoothunterstützung der Modul-Baugruppe zur Kommunikation mit anderen weiteren Vorrichtungen, zusätzlich zum Erfassungsgerät, ausgebildet ist.

Weitere Ausgestaltungen der Erfindung sind der nachfolgenden Beschreibung und den Unteransprüchen zu entnehmen.

Die Erfindung wird nachstehend anhand eines in den beigefügten schematischen Abbildungen dargestellten Ausführungsbeispiels näher erläutert.
Fig. 1 zeigt ein mobiles zur Auslieferungsabwicklung vorgesehenes Erfassungsgerät;
Fig. 2 zeigt eine mit dem Erfassungsgerät von Fig. 1 verbundene erfindungsgemäße Modul-Baugruppe; und

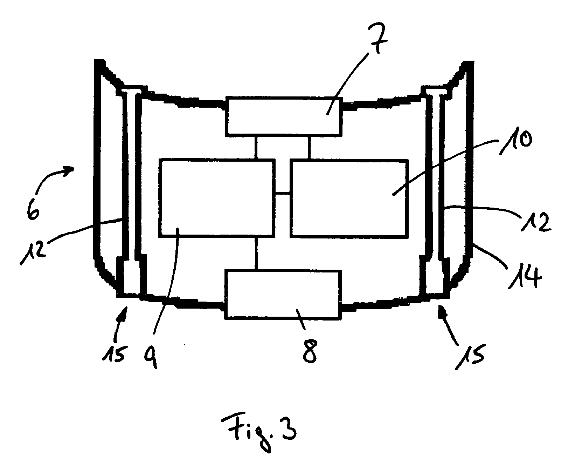

Fig. 3 zeigt schematisch in einer Vergrößerung die Modul-Baugruppe von Fig. 2 in teilweise geschnittener Darstellung.

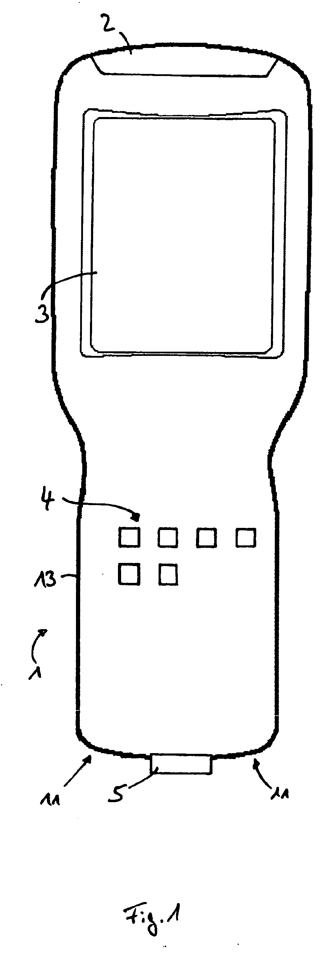

Fig. 1 zeigt ein mobiles Erfassungsgerät 1, das zur Auslieferungsabwicklung von auszuliefernden Gegenständen, insbesondere Einschreiben, Päckchen, Paketen von Kurier-, Express-, und Paketdiensten, vorgesehen ist. Das Erfassungsgerät 1 weist kopfseitig einen Leser 2 für maschinenlesbare Daten auf, der beispielsweise als Laser zum Bestimmen bzw. Auslesen von Barcode-Informationen ausgestaltet ist. Die Barcode-Informationen sind beispielsweise an auszuliefernden Gegenständen in Form von Aufklebern befestigt und identifizieren die auszuliefernden Gegenstände zusammen mit der Information des zugeordneten Auslieferungsorts und des zugeordneten Empfängers. Es ist ein Anzeige-Display 3 am Erfassungsgerät 1 vorgesehen, mit dem Informationen über die auszuliefernden Gegenstände, die Uhrzeit, das Datum usw. angezeigt werden können. Das Anzeige-Display 3 kann zudem als Eingabemöglichkeit ausgestaltet sein, sofern das Anzeige-Display 3 als Touch-Pad ausgeführt ist. Mit dem Touch-Pad kann beispielsweise eine Unterschrift des Empfängers bei der Auslieferung aufgenommen werden. Zudem ist als Eingabemittel 4 eine Tasten aufweisende Tastatur vorgesehen.

Endseitig weist das Erfassungsgerät 1 eine Schnittstelle 5 zur Datenkommunikation auf. Die Schnittstelle 5 ist als Steckverbindung ausgeführt, mit der periphere Vorrichtungen an das Erfassungsgerät 1 anbaubar bzw. verbindbar mit diesem sind. Die Schnittstelle 5 kann zum Auslesen der in dem Erfassungsgerät 1 gespeicherten Daten durch einen Computer dienen, der über die Schnittstelle mit dem Erfassungsgerät 1 verbunden ist. Ferner kann ein im Erfassungsgerät 1 vorhandener Akku als Spannungsquelle für das Erfassungsgerät 1 über die Schnittstelle 5 aufladbar sein.

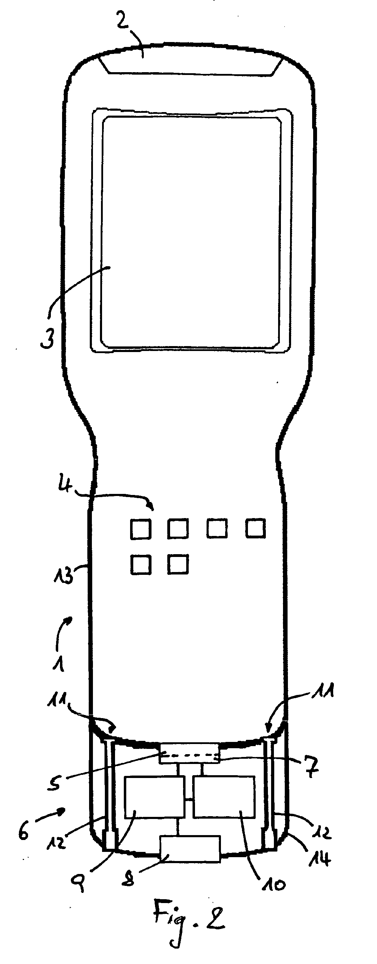

In Fig. 2 ist eine Modul-Baugruppe 6 gezeigt, die als an das Erfassungsgerät 1 anbaubare, periphere Modul-Baugruppe 6 ausgestaltet ist, und über die Schnittstelle 5 mit dem Erfassungsgerät 1 verbunden ist. Zur Verbindung mit dem Erfassungsgerät 1 über die Schnittstelle 5 des Erfassungsgeräts weist die Modul-Baugruppe 6 eine mit der Schnittstelle 5 kompatible bzw. komplementäre Schnittstelle 7 auf. Die Schnittstellen 5, 7 sind in dem in Fig. 2 schematisch gezeigten Ausführungsbeispiel als Steckverbindungen ausgestaltet, die austauschbar sein können.

Die Modul-Baugruppe 6 ist als GPS-gestützte Navigationseinheit ausgebildet und stellt an der Schnittstelle 6 des Erfassungsgeräts 1 Navigationsdaten bereit, die über die Schnittstelle 5 des Erfassungsgeräts 1 für wählbare Auslieferungsorte abrufbar sind. Die von dem Zusteller auszuliefernden Gegenstände werden mit dem Erfassungsgerät 1 identifiziert, was über ein Auslesen des Barcodes durch den Leser 2 erfolgen kann, und anhand der Adresse des Empfängers wird eine Route über die Navigationsdaten, die die Modul-Baugruppe 6 liefert, in der Modul-Baugruppe 6 berechnet.

Endseitig, der Seite mit der Schnittstelle 7 gegenüber angeordnet, weist die Modul-Baugruppe eine Schnittstelle 8 auf, die die Schnittstelle 5 des Erfassungsgeräts 1 reproduziert. Die Schnittstelle 8 ist identisch zur Schnittstelle 5 ausgestaltet. Die Schnittstelle 5 wird in der Modul-Baugruppe zur Schnittstelle 8 "durchgeschliffen".

Die Modul-Baugruppe 6 weist einen Prozessor und einen Speicher 9 auf, in dem die Funktionen zur Ausführung der Funktionen der Modul-Baugruppe abgelegt und ausführbar sind. Ferner ist in der Modul-Baugruppe 6 ein GPS-Modul 10 angeordnet, das für die GPS-gestützte Navigationsfunktion vorgesehen ist. Im Speicher 9 ist vorzugsweise eine Setuproutine vorgesehen, die automatisch gestartet wird, nachdem das Erfassungsgerät 1 die an der Schnittstelle 5 angebrachte Modul-Baugruppe 1 erkannt hat.

Die Setuproutine im Speicher 9 modifiziert die Software des Erfassungsgeräts 1, was nötig ist, damit die Software des Erfassungsgeräts, d.h. die eigentliche Software zum Verwalten der Auslieferungsdaten, die Software, d.h. die im Speicher 9 abgelegten Befehle, der Modul-Baugruppe 6 und die Software zur Bereitstellung der Navigationsdaten, die der eigentlichen Software der Modul-Baugruppe 6 untergeordnet ist, koexistieren können.

Nachdem die Setuproutine die Software des Erfassungsgeräts 1 modifiziert hat, registriert die Setuproutine die Schnittstellensoftware und die Software zur Bereitstellung der Navigationsdaten. Dabei ist zu beachten, dass sowohl die Schnittstellensoftware als auch die Software zur Bereitstellung der Navigationsdaten nicht in einem Speicher des Erfassungsgeräts 1 installiert werden. Die Software der Modul-Baugruppe 6 verbleibt in der Modul-Baugruppe 6 und wird nicht exportiert, es erfolgt lediglich eine Modifikation der Software des Erfassungsgeräts 1. Dadurch ist gewährleistet, daß die Schnittstellensoftware und die Software zur Bereitstellung der Navigationsdaten auch nach einem Warm- oder Kaltstart mit ihrem Status vor dem Start starten können.

Die Navigationsfunktion, d.h. die Berechnung der Route, erfolgt autark in der Modul-Baugruppe 6, mit den dort abgelegten Befehlen im Speicher 9, wobei die Modul-Baugruppe 6 die Daten für die auszuliefernden Gegenstände in Form der zugeordneten Adresse über die Schnittstelle 5 erhält und die Route berechnet.

Vorzugsweise kann die Modul-Baugruppe die den auszuliefernden Gegenständen zugeordneten Auslieferungsorte in Form einer Route mit kürzester Strecke oder schnellster abzufahrender Strecke anordnen und so die Auslieferung der Gegenstände optimieren.

Im in Fig. 2 dargestellten Ausführungsbeispiel werden die Daten für den nächsten Auslieferungsort, d.h. die Route dorthin, auf dem Anzeige-Display 3 dargestellt. Eventuelle Abfragen, die im Zusammenhang mit der Navigationsfunktion stehen, können über die Tastatur 4 als Eingabemittel vom Bediener beantwortet werden. Ebenso sind Eingaben derart möglich, daß der Bediener Vorgaben hinsichtlich der Route gibt. Die Eingabe kann auch über das Anzeige-Display 3 erfolgen, sofern dieses als Touch-Pad ausgestaltet ist.

Neben der Reproduktion der Schnittstelle 5 des Erfassungsgeräts 1 an der Modul-Baugruppe 6 werden Öffnungen des Gehäuses 13 des Erfassungsgeräts 1, die von der Modul-Baugruppe 6 abgedeckt werden, an der Modul-Baugruppe 6 unter Beibehaltung der Maße und Lage der Öffnungen zueinander reproduziert. Das Erfassungsgerät 1 weist Öffnungen 11 mit Innengewinde auf, in die eine Schraube 12 mit entsprechendem Außengewinde einsetzbar ist. Die Schrauben 12 sind in Kanälen eines Gehäuses 14 der Modul-Baugruppe 6 aufgenommen. Der Schraubenkopf der Schrauben 12 weist die gleichen Abmessungen und das gleiche Innengewinde wie die Öffnungen 11 auf. Die Schraubenköpfe bilden ihrerseits wieder Öffnungen 15. Es kann vorgesehen sein, daß die Schrauben 12 nur in dem Bereich ein Außengewinde aufweisen, in dem sie mit dem Innengewinde der Öffnungen 11 in Eingriff gelangen.

Neben der elektrischen bzw. elektronischen Schnittstelle 5 werden die "mechanischen Schnittstellen" bzw. "mechanischen Verbindungen" reproduziert. Die Lage zueinander, die Abmessungen und die Ausgestaltung der Öffnungen 11 sind identisch zu der Lage zueinander, den Abmessungen und der Ausgestaltung der Öffnungen 15.

Das Gehäuse 14 der Modul-Baugruppe 6 kann an das Gehäuse 13 des Erfassungsgeräts 1 anpaßbar sein. Dabei sind eventuelle Kanäle für die Schrauben 12 entsprechend dem Gehäuse 13 des Erfassungsgeräts 1 im Gehäuse 14 der Modul-Baugruppe 6 angeordnet.

Die äußere Kontur des Gehäuses 14 der Modul-Baugruppe 6 ist im Bereich des Kontakts zwischen Erfassungsgerät 1 und Modul-Baugruppe 6 komplementär zur äußeren Kontur des Gehäuses 13 des Erfassungsgeräts 1 ausgebildet.

Bevorzugt ist die in Fig. 2 gezeigte Schnittstelle 5 des Erfassungsgeräts 1 ein COM-Interface mit entsprechender Steckverbindung, dessen Anordnung zur Befestigung eines Steckers in die Steckverbindung bzw. Buchse zusammen mit Befestigungsmöglichkeiten in Form von Öffnungen bzw. Löchern mit Innengewinde am Gehäuse 14 der Modul-Baugruppe 6 reproduziert ist.

## Patentansprüche

1. Für eine Auslieferungsabwicklung ausgestaltetes mobiles Erfassungsgerät (1) mit einem Leser (2) für an auszuliefernden Gegenständen angebrachte maschinenlesbare Daten, einem Anzeige-Display (3) zur Darstellung der einem auszuliefernden Gegenstand zugeordneten Daten und einer Schnittstelle (5) zur Datenkommunikation, **dadurch gekennzeichnet, dass** das Erfassungsgerät (1) eine Modul-Baugruppe (6) umfasst, die als anbaubare periphere GPS-gestützte Navigationseinheit ausgebildet ist und Navigationsdaten über die Schnittstelle (5) des Erfassungsgeräts (1) für wählbare Auslieferungsorte bereitstellt, wobei die Schnittstelle (5) des Erfassungsgeräts (1) an der Modul-Baugruppe (6) reproduziert ist und wobei die Navigationsdaten über die Schnittstelle (5) des Erfassungsgeräts (1) für die wählbaren Auslieferungsorte abrufbar sind.

2. Erfassungsgerät (1) nach Anspruch 1, **dadurch gekennzeichnet, dass** in einem Speicher (9) der Modul-Baugruppe (6) Befehle zum Ausführen der Funktionen der Modul-Baugruppe (6) abgelegt und ausführbar sind.

3. Erfassungsgerät (1) nach Anspruch 1 oder 2, **dadurch gekennzeichnet, dass** Öffnungen eines Gehäuses (13) des Erfassungsgeräts (1), die von der Modul-Baugruppe (6) abdeckbar sind, an der Modul-Baugruppe (6) unter Beibehaltung der Maße und Lage zueinander reproduziert sind.

4. Erfassungsgerät (1) nach einem der Ansprüche 1 bis 3, **dadurch gekennzeichnet, dass** ein Gehäuse (14) der Modul-Baugruppe (6) an das Gehäuse (13) des Erfassungsgeräts (1) anpassbar ist.

5. Erfassungsgerät (1) nach einem der Ansprüche 1 bis 4, **dadurch gekennzeichnet, dass** zur Verbindung mit der Schnittstelle (5) und zur Reproduktion der Schnittstelle (5) austauschbare Steckverbindungen vorgesehen sind.

6. Erfassungsgerät (1) nach einem der Ansprüche 1 bis 5, **dadurch gekennzeichnet, dass** die Schnittstelle (5) ein COM-Interface ist, dessen Anordnung zur Befestigung eines Steckers am Gehäuse (14) der Modul-Baugruppe (6) reproduziert ist.

7. Erfassungsgerät (1) nach Anspruch 6, **dadurch gekennzeichnet, dass** zur Befestigung des Steckers am COM-Interface Schrauben (12) vorgesehen sind, die sich durch das Gehäuse (14) der Modul-Baugruppe (6) erstrecken, und die kopfseitig mit einem Gewinde zur Aufnahme von Schrauben zur Befestigung eines Steckers am reproduzierten COM-Interface ausgestaltet sind.

8. Erfassungsgerät (1) nach einem der Ansprüche 2 bis 7, **dadurch gekennzeichnet, dass** im Speicher (9) der Modul-Baugruppe (6) abgelegte Befehle so ausgestaltet sind, dass die Navigationsfunktion autark in der Modul-Baugruppe (6) durchführbar ist.

9. Erfassungsgerät (1) nach einem der Ansprüche 1 bis 8, **dadurch gekennzeichnet, dass** ein am Erfassungsgerät (1) vorgesehenes Eingabemittel (4) zur Eingabe von Abfragen für die Navigationsfunktion verwendbar ist.

10. Erfassungsgerät (1) nach einem der Ansprüche 2 bis 9, **dadurch gekennzeichnet, dass** durch im Speicher (9) der Modul-Baugruppe (6) abgelegte Befehle die zur Ausführung des Erfassungsgeräts (1) im Erfassungsgerät (1) abgelegten Befehle veränderbar sind.

11. Erfassungsgerät (1) nach einem der Ansprüche 1 bis 10, **dadurch gekennzeichnet, dass** eine Bluetooth-Einheit zur drahtlosen Kommunikation insbesondere mit der Modul-Baugruppe (6) verbunden ist.

## Claims

1. Mobile recording device (1), designed for delivery handling, having a reader (2) for machine-readable data affixed to deliverable items, an indicator display (3) for presenting the data associated with a deliverable item and an interface (5) for data communication, **characterized in that** the recording device (1) comprises a module assembly (6) that is in the form of an attachable peripheral GPS-assisted navigation unit and that provides navigation data via the interface (5) of the recording device (1) for selectable delivery locations, wherein the interface (5) of the recording device (1) is reproduced on the module assembly (6) and wherein the navigation data can be retrieved via the interface (5) of the recording device (1) for the selectable delivery locations.

2. Recording device (1) according to Claim 1, **characterized in that** commands for performing the functions of the module assembly (6) are stored and can be executed in a memory (9) of the module assembly (6).

3. Recording device (1) according to Claim 1 or 2, **characterized in that** openings in a housing (13) of the recording device (1) that are able to be covered by the module assembly (6) are reproduced on the module assembly (6) while maintaining the dimensions and position relative to one another.

4. Recording device (1) according to one of Claims 1 to 3, **characterized in that** a housing (14) of the module assembly (6) can be adapted to the housing (13) of the recording device (1).

5. Recording device (1) according to one of Claims 1 to 4, **characterized in that** interchangeable plug connections are provided for connection to the interface (5) and for reproduction of the interface (5).

6. Recording device (1) according to one of Claims 1 to 5, **characterized in that** the interface (5) is a COM interface from which the arrangement for fastening a plug to the housing (14) of the module assembly (6) is reproduced.

7. Recording device (1) according to Claim 6, **characterized in that** screws (12) are provided for fastening the plug to the COM interface, said screws extending through the housing (14) of the module assembly (6) and, at the head end, being designed to have a thread for receiving screws for fastening a plug to the reproduced COM interface.

8. Recording device (1) according to one of Claims 2 to 7, **characterized in that** commands stored in the memory (9) of the module assembly (6) are designed such that the navigation function can be performed autarkically in the module assembly (6).

9. Recording device (1) according to one of Claims 1 to 8, **characterized in that** an input means (4) provided on the Recording device (1) can be used to input requests for the navigation function.

10. Recording device (1) according to one of Claims 2 to 9, **characterized in that** commands stored in the memory (9) of the module assembly (6) can alter the commands stored in the sensing appliance (1) for implementing the recording device (1).

11. Recording device (1) according to one of Claims 1 to 10, **characterized in that** a Bluetooth unit is connected particularly to the module assembly (6) for wireless communication.

## Revendications

1. Appareil mobile de saisie (1) prévu pour une validation de livraison, avec un lecteur (2) de données apposées sur des objets à livrer et lisibles par machine, un écran d'affichage (3) pour la représentation des données correspondant à l'objet à livrer, et une interface (5) pour le transfert des données, **caractérisé en ce que** ledit appareil de saisie (1) comporte un sous-ensemble modulaire (6), qui est constitué en tant qu'unité périphérique amovible de navigation GPS, et qui prépare des données de navigation au travers de ladite interface (5) dudit appareil de saisie (1) pour des lieux de livraison sélectionnables, où ladite interface (5) dudit appareil de saisie (1) est reproduite sur ledit sous-ensemble modulaire (6), et où on peut appeler les données de navigation au travers de ladite interface (5) dudit appareil de saisie (1) pour des lieux de livraison sélectionnables.

2. Appareil de saisie (1) selon la revendication 1, **caractérisé en ce que** des ordres pour l'exécution des fonctions dudit sous-ensemble modulaire (6) sont stockés dans une mémoire (9) dudit sous-ensemble modulaire (6) et extractibles de ladite mémoire (9).

3. Appareil de saisie (1) selon la revendication 1 ou 2, **caractérisé en ce que** des ouvertures d'un boîtier (13) dudit appareil de saisie (1), qui sont recouvrables par ledit sous-ensemble modulaire (6), sont reproduites au niveau dudit sous-ensemble modulaire (6) avec les mêmes dimensions et la même position respective.

4. Appareil de saisie (1) selon l'une des revendications 1 à 3, **caractérisé en ce qu'**un boîtier (14) dudit sous-ensemble modulaire (6) est adaptable au boîtier (13) dudit appareil de saisie (1).

5. Appareil de saisie (1) selon l'une des revendications 1 à 4, **caractérisé en ce que** des connexions enfichables amovibles sont prévues pour la liaison avec ladite interface (5) et pour la reproduction de ladite interface (5).

6. Appareil de saisie (1) selon l'une des revendications 1 à 5, **caractérisé en ce que** ladite interface (5) est une interface de type « COM » ou « modèle de composant objet», dont l'agencement est reproduit pour la fixation d'un connecteur au boîtier (14) dudit sous-ensemble modulaire (6).

7. Appareil de saisie (1) selon la revendication 6, **caractérisé en ce que** des vis (12) sont prévues pour la fixation dudit connecteur à ladite interface « COM », lesquelles dites vis (12) s'étendent au travers dudit boîtier (14) dudit sous-ensemble modulaire (6), et sont équipées du côté de leur tête d'un taraudage pour la réception de vis de fixation d'un connecteur à ladite interface COM reproduite.

8. Appareil de saisie (1) selon l'une des revendications 2 à 7, **caractérisé en ce que** des ordres introduits dans ladite mémoire (9) dudit sous-ensemble modulaire (6) sont agencés de façon à ce que la fonction de navigation puisse être exécutée de façon autonome dans ledit sous-ensemble modulaire (6).

9. Appareil de saisie (1) selon l'une des revendications 1 à 8, **caractérisé en ce que** un moyen d'introduction des données (4) prévu au niveau dudit appareil de saisie (1) est utilisable pour l'entrée des consultations pour la fonction de navigation.

10. Appareil de saisie (1) selon l'une des revendications 2 à 9, **caractérisé en ce que** les ordres introduits dans ledit appareil de saisie (1) pour la conduite dudit appareil de saisie (1) sont remplaçables par des ordres introduits dans ladite mémoire (9) dudit sous-ensemble modulaire (6).

11. Appareil de saisie (1) selon l'une des revendications 1 à 10, **caractérisé en ce que** une unité « Bluetooth » est reliée en particulier audit sous-ensemble modulaire (6) pour la communication sans fil.
